# EUROPEAN PATENT SPECIFICATION

(11) **EP 3 934 852 B1**
(45) Date of publication and mention of the grant of the patent: **09.12.2026**
(21) Application number: 20716256.1
(22) Date of filing: 04.03.2020
(51) Int. Cl.: B25G 1/10, B25D 1/04, B25D 1/06, B25F 1/00, B25D 1/00, B25H 7/00

(54) **MULTI-USE HAMMER**
MEHRZWECKHAMMER
MARTEAU À USAGES MULTIPLES

(30) Priority: 04.03.2019 US 201962813421 P; 11.09.2019 US 201962898630 P
(43) Date of publication of application: 12.01.2022
(73) Proprietor: Raymond, Daniel J., Saginaw, MI 48601 (US)
(72) Inventor: Raymond, Daniel J., Saginaw, MI 48601 (US)
(74) Representative: Zacco Denmark A/S
(86) International application number: PCT/US2020/020925
(87) International publication number: WO 2020/180950

(56) References cited:
- DE-U1- 20 007 275
- FR-A1- 2 870 474
- US-A- 5 826 466
- US-A- 640 452
- US-A1- 2007 006 686

## Description

### CROSS-REFERENCE TO RELATED APPLICATION

This application claims priority to U.S. Provisional Patent Application Nos. 62/813,421, filed March 4, 2019, titled "HAMMER" and 62/898,630, filed September 11, 2019, titled "HAMMER".

### BACKGROUND O/F THE INVENTION

### 1. Field of the Invention

The present invention is related generally to hammers and is more particularly related to hammers which have secondary functions.

### 2. Related Art

In the construction industry, workers regularly use a number of different tools for various functions related to building framing and shaping and hanging drywall sheets. Such tools often include a hammer, a stud finder, a ruler, and a T-square.

Document US 2007/006686 A1 discloses a hammer, comprising:
a head and a handle extending from said head;
said head having a front portion with a striking face, said head further having a pair of opposing cheeks and a pair of claws, on a rear section, extending to distal ends, the base of the rear section lying in a common first plane with a lower surface of the front portion; and
at least a portion of said handle extending linearly and perpendicularly to said first plane for allowing a user to draw a straight line which is perpendicular to the first plane; and
one surface of said handle including a plurality of angle indicia with lines that point directly towards a common point that lies at the intersection of the striking face and the lower surface so that the hammer can be rotated about a pivot point established by the common point to a desired angle so that a line at that angle can be drawn using the handle as a guide.

### SUMMARY OF THE INVENTION

The present invention is defined in independent claim 1, and related to a hammer with a head and a handle which extends from the head. Preferred embodiments are defined in the dependent claims.

At least a portion of the handle extends linearly and perpendicularly from the first plane to allow a user to draw a straight line which is perpendicular to the first plane.

According to the present invention, the head includes a front portion on one side of the handle and a pair of claws on an opposite side of the handle from the front portion and wherein the front portion has an outer surface that partially lies in the first plane.

According to a preferred aspect of the present invention, the front portion of the head is hexagonally shaped with a side that lies in the first plane.

According to the present invention, the claws extend to respective ends which are located in the first plane.

According to the present invention, the head further includes a shoulder adjacent the handle and wherein the shoulder lies in the first plane.

According to a preferred aspect of the present invention, the handle further includes measurement indicia which indicates distance from the first plane.

According to still the present invention, the handle further includes angle indicia which indicates angles relative to the ends of the claws.

According to a preferred aspect of the present invention, the hammer is 36.8cm (fourteen and a half inches) long.

According to yet another preferred aspect of the present invention, at least a portion of the handle of the hammer is 3.8cm (one and a half inches) wide.

According to still another preferred aspect of the present invention, a magnet is attached with the handle.

According to a further preferred aspect of the present invention, the handle has a plurality of spaced apart notches.

According to yet a further preferred aspect of the present invention, the head has a groove for receiving a projection on a surface and wherein a writing instrument can be placed in one of the notches and the hammer can be rotated about the projection to draw a circle.

### BRIEF DESCRIPTION OF THE DRAWINGS

These and other features and advantages of the invention will become more readily appreciated when considered in connection with the following description of the presently preferred embodiments, appended claims and accompanying drawings, in which:
Figure 1 is a perspective view of a hammer constructed according to a first embodiment of the present invention;
Figure 2 is another perspective view of the hammer of Figure 1 and taken from a different perspective than Figure 1;
Figure 3A is a front elevation view of the hammer of Figure 1;
Figure 3B is a back elevation view of the hammer of Figure 1;
Figure 4A shows the hammer of Figure 1 being used to draw a line that is perpendicular to an edge of a wood board;
Figure 4B shows the hammer of Figure 1 being used to draw a line that is perpendicular to a wall;
Figure 5 shows the hammer of Figure 1 being used to draw a prescribed angle on a wood board;
Figure 6 shows the hammer of Figure 1 being used to measure a distance between neighboring studs;
Figure 7 shows the hammer of Figure 1 being used to measure the width of a stud;
Figure 8 is a perspective view of a hammer constructed according to a second embodiment of the present invention;
Figure 9 is another perspective view of the hammer of Figure 8 taken from a different perspective than Figure 8;
Figure 10 is a perspective view of the hammer of Figure 8 being used to draw a forty-five degree (45°) angle;
Figure 11 shows the hammer of Figure 8 being used to draw a circle on a sheet of drywall;
Figure 12 is a perspective view of a hammer constructed according to a third embodiment of the present invention;
Figure 13 is a front elevation view of a hammer constructed according to a fourth embodiment of the present invention;
Figure 14 is a perspective view of an alternate head for a hammer;
Figure 15 is an enlarged view of a portion of Figure 14;
Figure 16 is an enlarged view of a different portion of Figure 14 than Figure 14.

### DESCRIPTION OF THE ENABLING EMBODIMENTS

Referring to the Figures, wherein like numerals indicate corresponding parts throughout the several views, one aspect of the present invention is related to an improved multi-tool device which has the form of a hammer **20.** As discussed extensively below, the hammer **20** has a number of built in features that are functional which allow the hammer **20** to perform other functions beyond pounding nails. These features are incorporated into the hammer **20** in such a way that the basic shape of the hammer **20** remains intact, and thus, the performance of the hammer **20** for driving nails is not compromised. In various embodiments discussed below, some (but not all) of the additional functions that the hammer **20** is able to perform include measuring and drawing angles; measuring lengths; locating studs behind a drywall sheet; tightening fasteners; starting nails; and starting fencing staples.

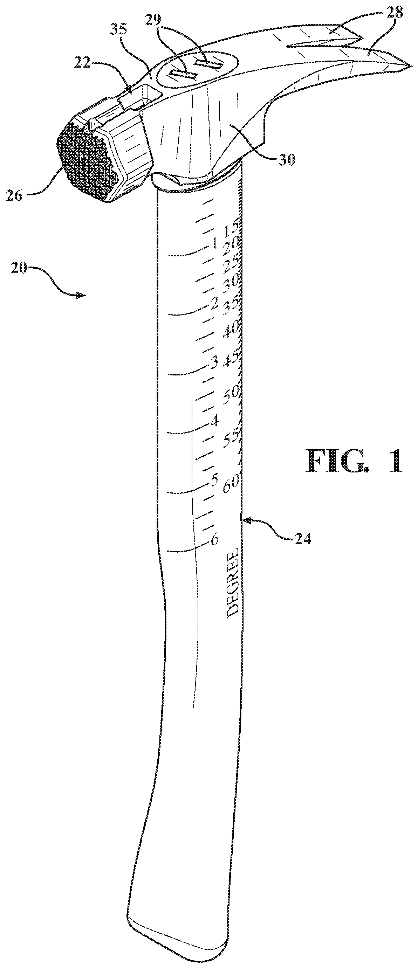

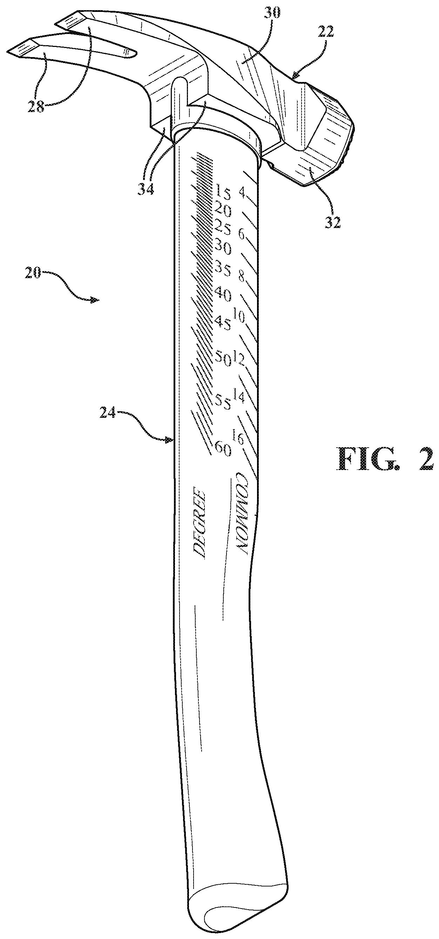

Referring to Figures 1-3, a first exemplary embodiment of the hammer **20** is generally shown. The hammer **20** has a head **22** and a handle **24** that extends away from the head **22** in a first direction. The head **22** extends in a second direction, which is perpendicular to the first direction, from a face **26** at one end to a pair of claws **28** at an opposite end. The head **22** has opposing cheeks **30** which lie in respective planes that are both perpendicular to a plane of the face **26.** In the exemplary embodiment, the face **26** has a hexagonal shape and is textured. However, alternate shapes and configurations may be employed. The claws **28** are spaced apart from one another by a converging groove. As with conventional hammers, a user can hold and swing the hammer **20** from the handle **26** to drive nails with the face **26** and can pull nails with the claws **28.** Thus, the hammer **20** satisfies the basic purposes of a conventional hammer.

In the first exemplary embodiment, the handle **24** of the hammer **20** is made out of wood or a thermosetting polymer matrix (fiberglass), and the head **22** is made out of metal (such as iron, steel, or an alloy steel). The metal head **22** is preferably shaped to its final shape through a casting or a forging operation. However, any suitable process or combination of processes may be employed. In the exemplary embodiment, the head **22** has an elliptical hole, and a top end of the handle **24** extends into the elliptical hole to connect the handle **24** with the head **22.** During manufacture of the hammer **20,** once the top end of the handle **24** is inserted into the proper position within the elliptical hole of the head **22,** one or more wedges **29** are driven into the material of the handle to lock the handle **24** with the head **22.** This configuration allows for cost savings through economies of scale by allowing the same head **22** to be used with differently configured handles. Also, while the connection between the handle **24** and the head **22** is fully secure, a user can switch handles by drilling out the top end of the existing handle **24,** inserting the top end of a new different handle (which could be identical to or different than the handle **24**), and driving a new wedge or new wedges into the new handle.

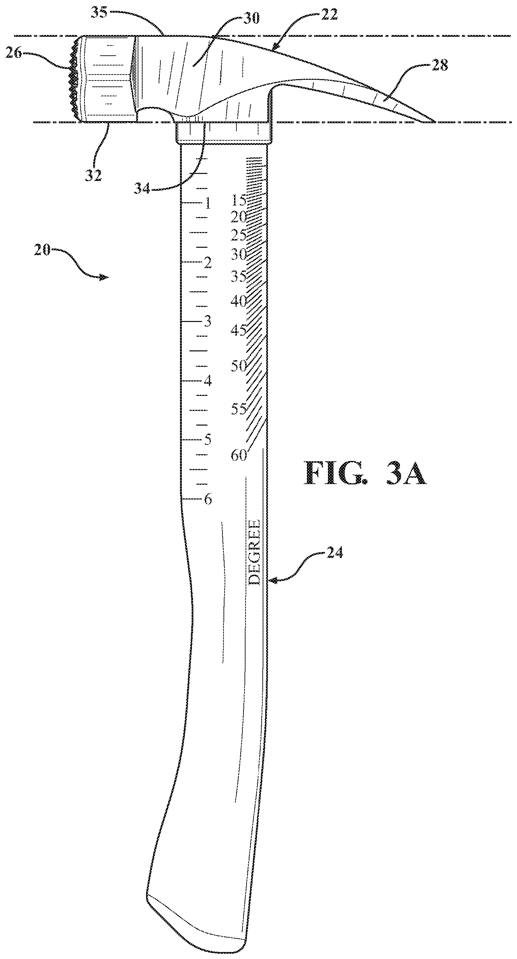

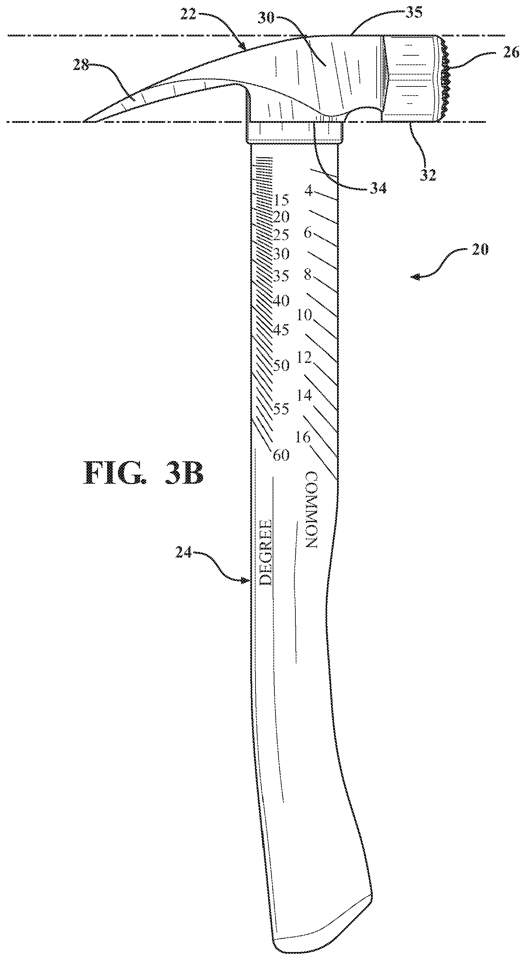

The hammer **28** can also be used to conveniently and easily draw ninety degree (90°) lines to the first and second planes on objects and to measure lengths in a manner similar to the use of a T-square. With reference to Figure 3, to perform this function, the head **22** has three co-planar features. Specifically, in the head **22,** the three co-planar surfaces are a lower surface **32** of a front area adjacent the face **26,** a shoulder **34** adjacent where the head **22** meets the handle **24,** and the ends of the claws **28.** In other words, all three of these features (the lower surface **32,** the shoulder **34,** and the ends of the claws **28**) lie in a common first plane. Additionally. an uppermost surface **35** of the head **22** extends linearly in a second plane which is parallel to the first plane. At least one side surface of the handle **24** extends linearly from the head **22** and perpendicularly to the first plane for a distance which is greater than halfway from the head **22** to a distal end of the handle **24.** In the exemplary embodiment, the side surfaces of the handle **24** are parallel with one another such that both side surfaces extend linearly from the head **22** and perpendicularly to the first plane.

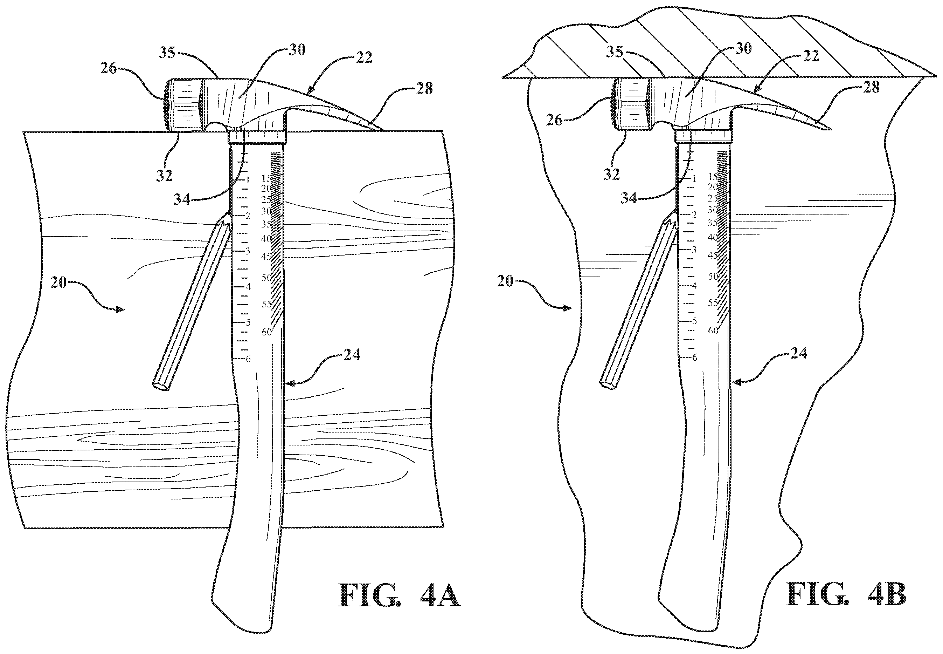

Thus, as shown in Figure 4A, one method of drawing a perpendicular line involves the user placing all three of the co-planar surfaces (the lower surface **32,** the shoulder **34,** and the ends of the claws **28**) against a first surface, such as on a wood board. The user then uses the linear side surface on the handle **24** as a straight edge to draw a line on the wood board with a writing utensil. As shown in Figure 4B, an alternate method of drawing a perpendicular line involves the user butting the uppermost surface **35** of the head **22** against a surface and using the linear side surface of the handle **24** as a straight edge to draw a line on the wood board.

As shown in Figure 3A, a front surface of the handle **24** is provided with indicia indicating the distance from the first plane. Accordingly, the hammer **20** can also be used as a ruler by placing all three of the co-planar surfaces (the lower surface **32,** the shoulder **34,** and the ends of the claws) against a first surface and using the indicia to measure a distance from that first surface. In the exemplary embodiment, the indicia for measuring length is in units of inches. However, any suitable unit for measuring length may be employed. Drawing perpendicular lines and taking length measurements are but two new functions that the hammer **20** can perform but conventional hammers cannot, and the features which allow for these new features do not interfere with the performance of the hammer 20 for driving and pulling nails.

The hammer **20** can also be used to conveniently and easily measure and draw desired angles other than ninety degrees (90°) onto objects, such as drywall sheets or wood boards. Referring now to Figure 3A, adjacent the length indicia, the front surface of the handle **24** is provided with angle indicia that is accompanied with a plurality of lines that all point directly to the ends of the claws **28** and that indicate respective angles from the ends of the claws **28** relative to the first plane. The angle indicia on the front surface of the exemplary embodiment of the handle **24** uses the units of degrees. Referring now to Figure 3B, a back surface of the handle **24** is provided with two different sets of angle indicia. One set of angle indicia is measured in the units of degrees, and the other set is common cuts measured in rise over run ratios with the run being fixed at 12. For example, in the exemplary embodiment, the common cuts angle indicia includes markings which correspond with 2:12, 4:12, 8:12, 10: 12, 14:12, and 16:12 common cuts.

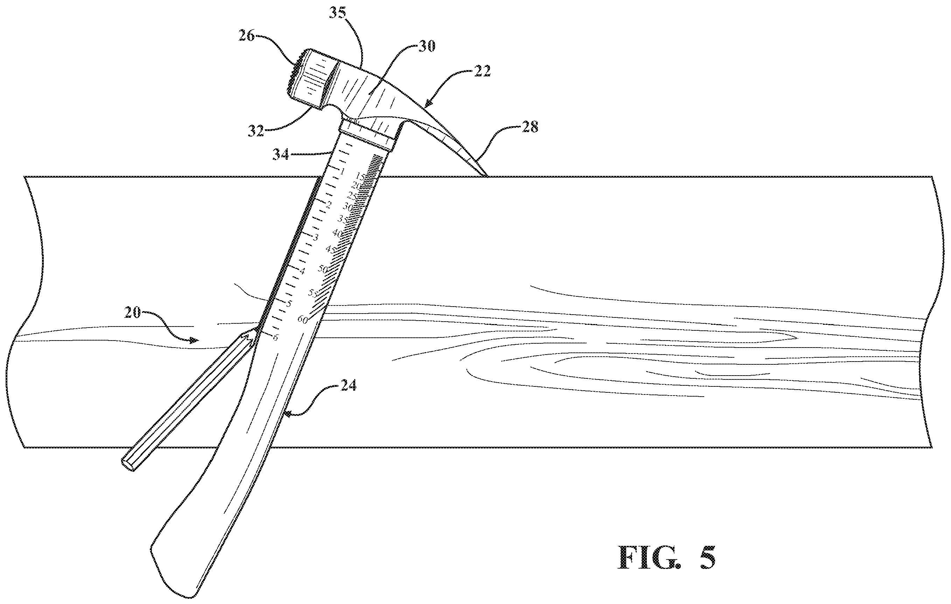

As shown in Figure 5, to draw an angled line, first the user, places the three co-planar features of the head **24** (the lower surface **32,** the shoulder **34,** and the ends of the claws **28**) against a first surface on the wood board. Next, the user pivots the hammer **20** about the ends of the claws **28** until the first surface on the wood board is aligned with a desired angle indicia. The user then holds the hammer **20** at this particular orientation and traces along the linear portion of the handle **24** to draw a straight line onto the wood board at the desired angle. The indicia includes both degree markings and common cut markings which indicate common angles for cutting in the building construction industry. An angle can be measured by a similar process.

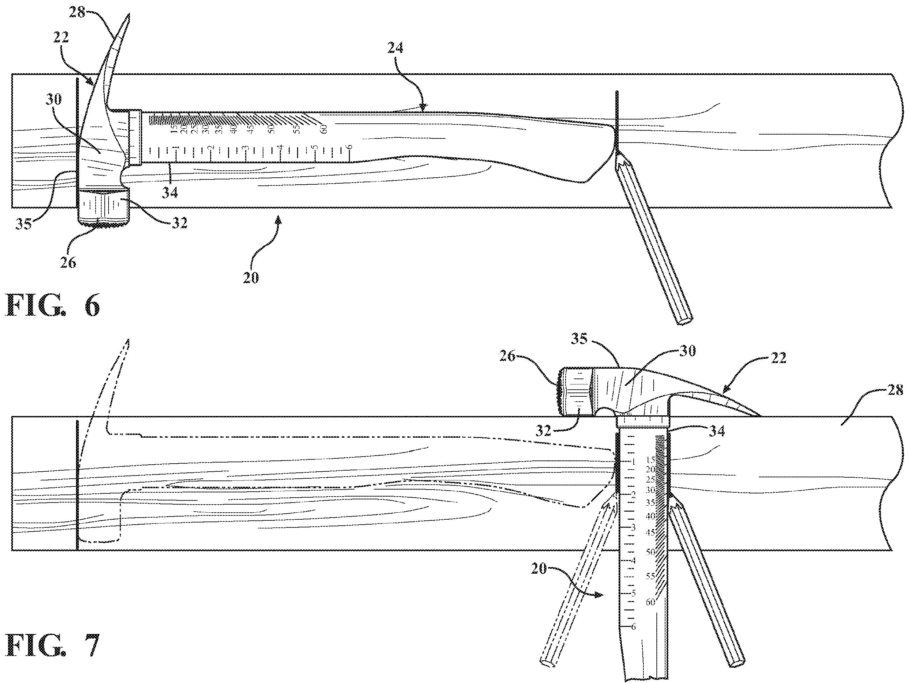

The hammer **20** can further be used to identify stud locations on, for example, a wood board or a drywall sheet. Referring to Figure 6, a total length of the hammer **20** from a top surface of the head **22** to an end of the handle **24** is fourteen and a half inches (14.5 in; 36.8cm), which matches the distance between facing surfaces of adjacent studs according to building codes in the United States. In an alternate embodiment, the total length of the hammer is sixteen inches (16 in; 40.6cm), which matches the center-to-center distance between adjacent studs. In other embodiments, the total length of the hammer could match either the distance between adjacent studs or the center-to-center distance between adjacent studs according to building standards in different locations.

Additionally, the handle **24** has a width of one and a half inch (1.5 in; 3.8cm), which is the standard thickness of a 2X4, 2X6, or 2X8 stud. Accordingly, once a user locates one stud on a sheet of drywall, the hammer **20** can be used to quickly mark out where the remaining studs are located by alternating between the arrangement of the hammer shown in Figure 6 and the arrangement shown in Figure 7 and marking the drywall sheet accordingly. This can save the user a great amount of time, particularly in the drywall industry and eliminates the need for a tape measure to perform this task.

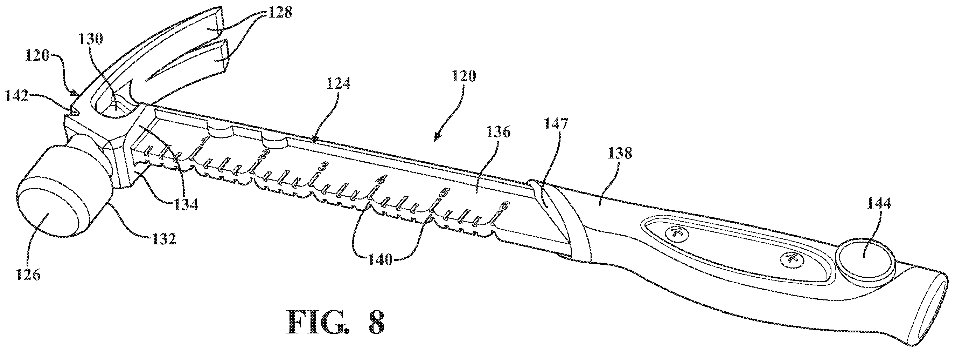

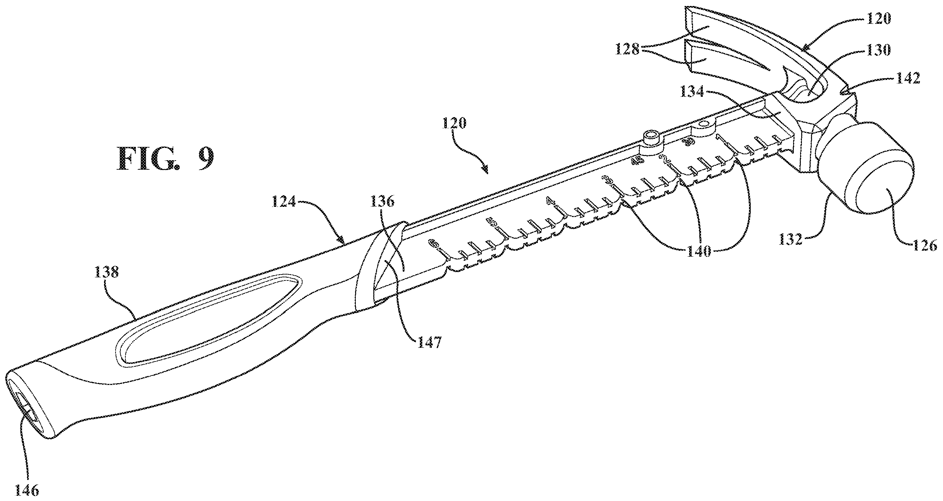

Referring now to Figures 8-11, a second embodiment of the hammer **120** is generally shown with like numerals, separated by a prefix of "1", indicating corresponding parts with the first exemplary embodiment described above. In the second exemplary embodiment, the handle **124** is made mostly out of metal (as opposed to wood in the case of the first exemplary embodiment) and has a measuring portion **136** and a gripping portion **138.** The gripping portion **138** is fixedly attached with the measuring portion **136** via a pair of screws which extend through aligned openings in both of the measuring and gripping portions **136, 138.**

The measuring portion **136** of the handle **124** includes ruler measuring indicia on one side and extends linearly on an opposite side. On the side with the measuring indicia, notches **140** are provided at certain locations, such as at each inch, so that a user can easily make markings at these often used locations. The linear opposite side of the handle **124** allows for the hammer **120** to be used to draw straight edges.

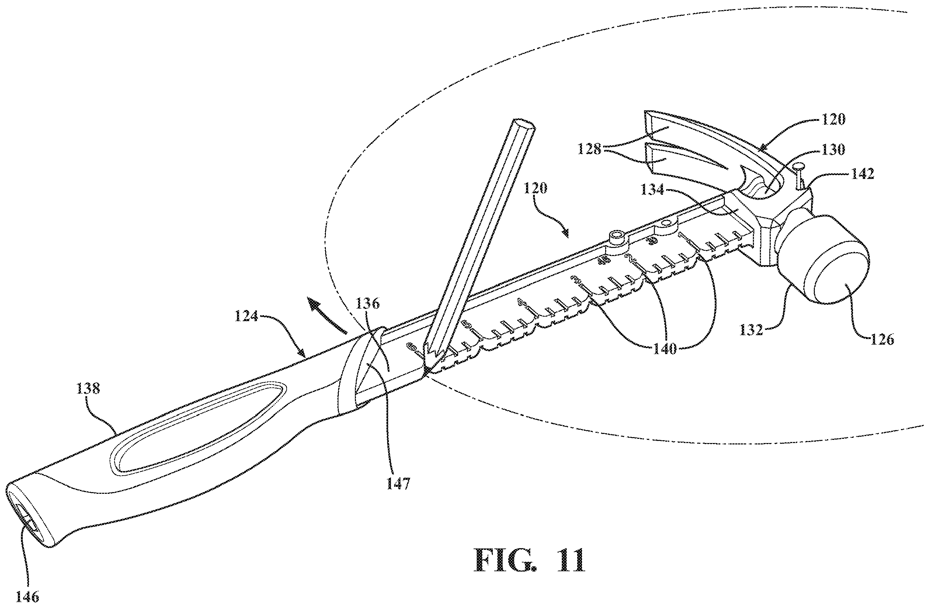

The hammer **120** can also be used to draw circles onto a surface, such as on a drywall sheet. With reference to Figure 11, to perform this function, a top surface of the head **122** is provided with a groove **142** which receives a projection, such as a nail, which will serve as a center of the circle. The user then places a pencil (or any suitable writing instrument) into one of the notches **140** formed into the handle **124** and rotates the hammer **120** three hundred and sixty degrees (360°) around the projection to draw the circle.

The hammer **120** further has features which allow it to detect studs behind a sheet of drywall and to tighten certain types of fasteners. Specifically, a magnet **144** is disposed in the gripping portion **138.** A user can grip the hammer **120** by the head **122** and hold the gripping portion **138** up against a wall. The magnet **144** will be attracted to nails or screws, thereby identifying to the user the locations of the studs in the wall. Further, a bottom end face of the gripping portion **138** has a hexagonal shaped opening **146** which can receive and be used to tighten certain types of fasteners. In the exemplary embodiment, the hexagonally-shaped opening **146** is sized to receive thirteen millimeters (13 mm) and one half inch (0.5 in; 1.3cm) fasteners.

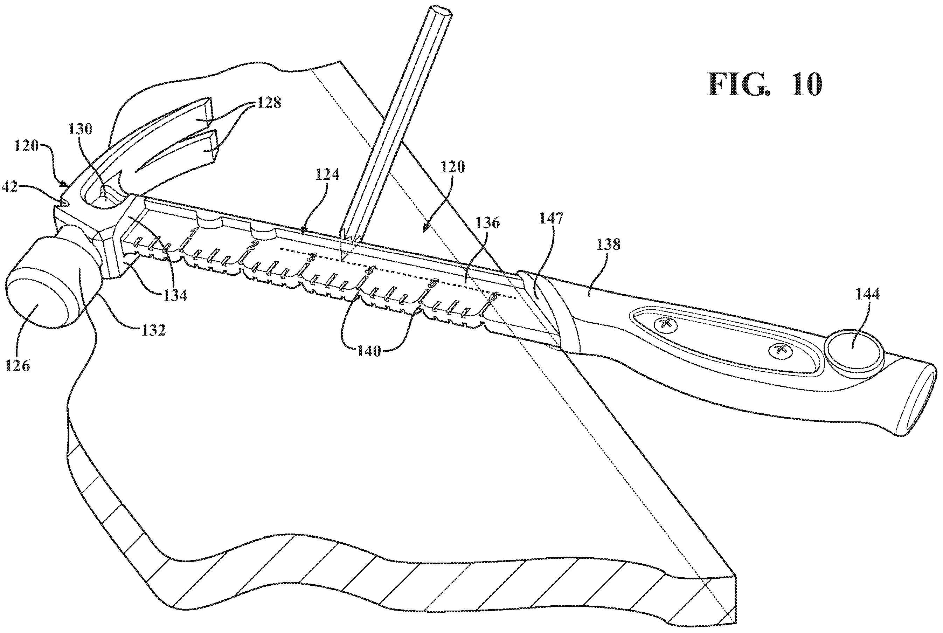

Further, the handle **124** includes a shoulder **147** which separates the measuring portion **136** from the gripping portion **138** and which is angled at a forty-five degree (45°) angle relative to the first plane and relative to the measuring portion **136.** Thus, as shown in Figure 10, the shoulder **147** can be placed against a surface on a work piece (such as a board of lumber) and one of the side surfaces of the measuring portion **136** can then be used as a straight edge to draw a forty-five degree (45°) line.

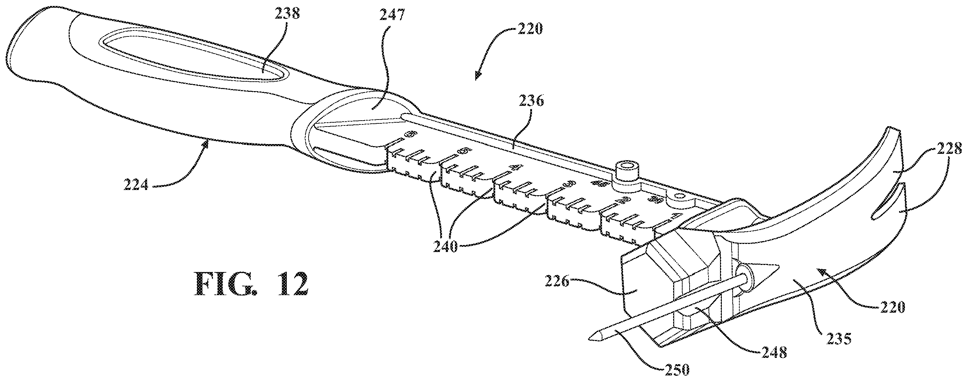

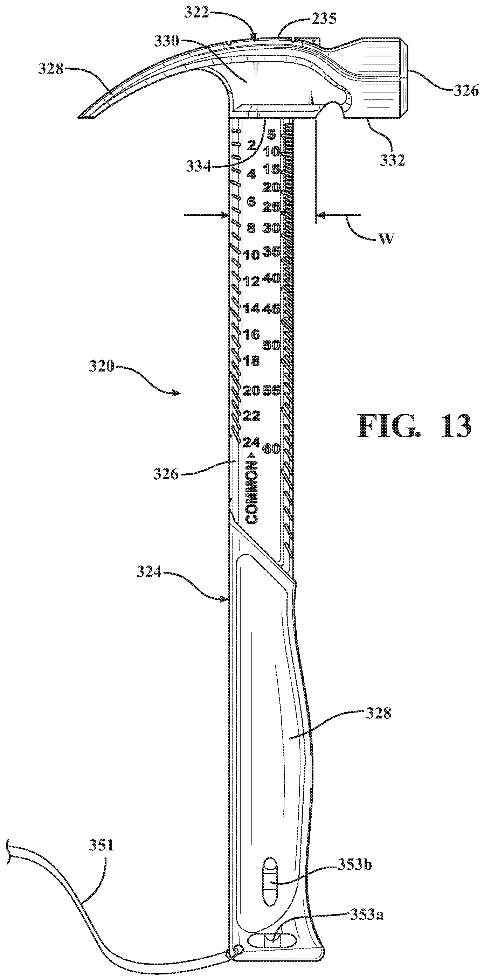

Referring now to Figures 12 and 13, a third exemplary embodiment of the hammer **220** is generally shown with like numerals, separated by a prefix of "2", indicating corresponding parts with the first two embodiments described above. In the third embodiment, the head **222** of the hammer **220** is provided with a nail starting feature in the form of a channel **248** which is located on an upper surface of the head **222.** The channel **248** extends from a forwardly facing nail starting surface on the head **222** and opens at the face **226.** A nail **250** can be placed in the channel **248** with a head of the nail **250** resting against the nail starting surface and with the sharp end of the nail **250** projecting past the face **226** of the hammer **220.** In this fashion, a user can controllably pound the nail **250** into a precise location without having to hold the nail **250** with his or her fingers. Referring now to Figure 11, a fourth exemplary embodiment of the hammer **320** is generally shown with like numerals, separated by a prefix of "3", indicating corresponding parts with the first three embodiments described above. In this embodiment, the measuring portion **336** of the handle **324** has measuring indicia on both sides (specifically, angles on one side and lengths on the other side) without the notches found in the second and third embodiments.

In contrast to the first embodiment shown in Figures 1-7, the handle **324** of the fourth embodiments has a width which is less than one and a half inches (1.5 in; 3.8cm). Thus, as shown in Figure 13, in this embodiment, the shoulder **334** of the head **322** has a width W which is one and a half inches (1.5 in; 3.8cm) to match stud width.

Further, the fourth embodiment of the hammer **320** includes a lanyard **351** adjacent a bottom end of the handle **224.** The lanyard **351** can be attached to an article of clothing on a user so that, in the event that a user drops the hammer **320,** it will only fall as long as the lanyard **351.** The length of the lanyard **351** should be long enough to not impair use of the hammer **320.** The gripping portion **328** of the handle **324** further includes a pair of bubble levels **353a, 353b** oriented perpendicularly to one another. One of the bubble levels **353a** can measure the orientation of an object when the uppermost surface **335** or the co-planar features (the lower surface **332,** the shoulder **334,** and the ends of the claws **328**) are placed against an object.

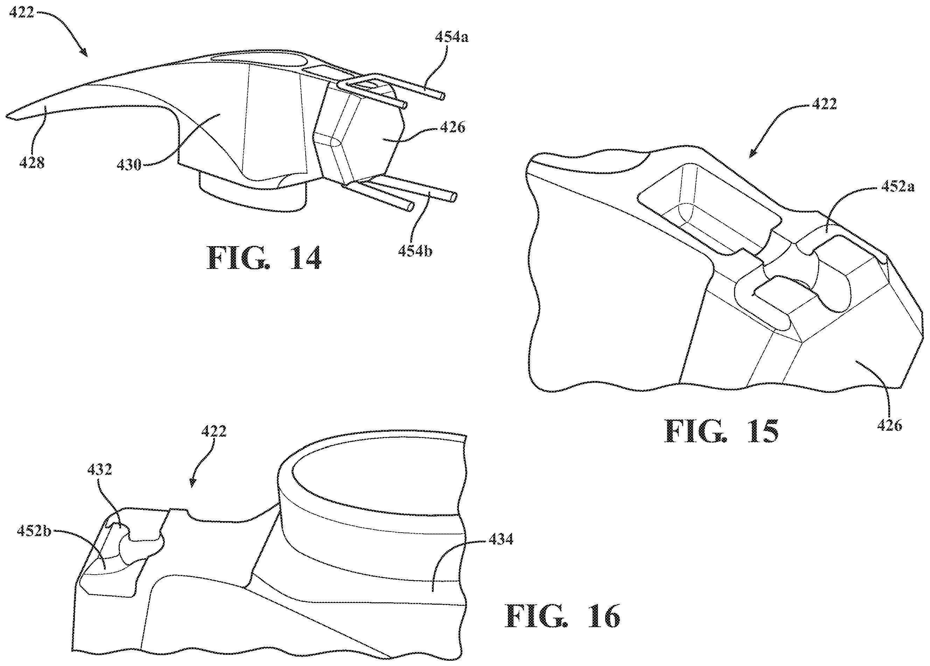

Turning now to Figures 14-16, an alternate embodiment of a head **424** for a hammer, such as any of the first four embodiments shown in Figures 1-13 and discussed above, is shown with like numerals, separated by a prefix of "4", indicating corresponding parts with the above-described embodiments. In this embodiment, the head **424** has a pair of staple grooves **452a, 452b** for holding staples **454a, 454b.** One of the grooves **452a** is formed into a top of the head **422** and is U-shaped for holding a U-shaped Romex staple **454a,** which are commonly used by electricians for holding wires against studs in buildings. The other groove **452b** is formed into a bottom of the head **422** and is V-shaped for holding a V-shaped fencing staple **454b,** of the type commonly used by ranchers to install fences.

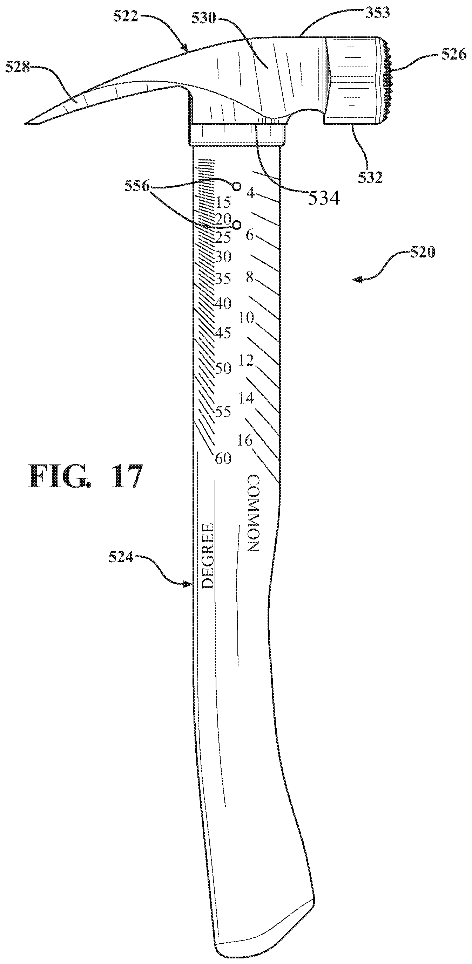

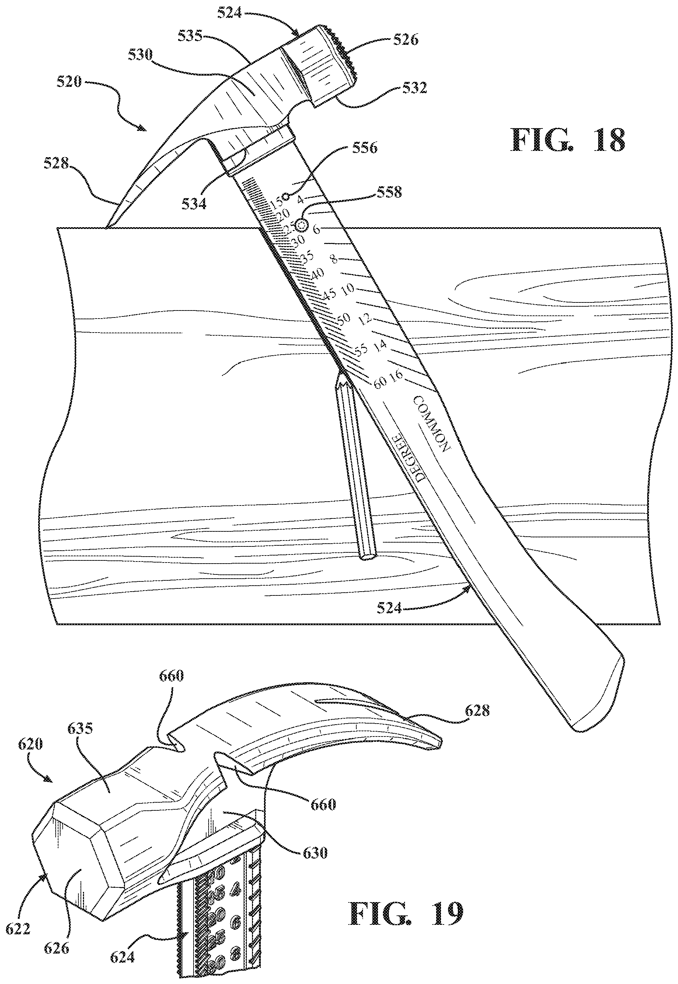

Referring now to Figures 17 and 18, a fifth embodiment of the hammer **520** is shown with like numerals, separated by a prefix of "5", indicating corresponding parts with the above-described embodiments. This hammer **520** is similar to the first embodiment shown in Figures 1-7 but further includes a pair of openings **556.** The openings **556** correspond with common cut angles indicated in the angle indicia. As shown in Figure 18, a pin **558** can be inserted into and through one of the openings to hold the hammer **520** in a predetermined orientation corresponding to the desired angle.

Referring now to Figure 19, a sixth embodiment of the hammer **620** is shown with like numerals, separated by a prefix of "6", indicating corresponding parts with the above-described embodiments. In this embodiment, the head **624** has a pair of longitudinally offset side nail pulling notches **660.** The side nail pulling notches **660** face in opposite directions, and the offset allows the side nail pulling notches **660** to access more nails. In other words, one side nail pulling notch **660** can reach some nail heads that the other cannot and vice versa.

Obviously, many modifications and variations of the present invention are possible in light of the above teachings and may be practiced otherwise than as specifically described while within the scope of the appended claims. Further, it is to be understood that certain terms of direction, such as upper, lower, top, and bottom are in reference to the orientation of the hammer as shown in Figure 1 and are not intended to be limiting.

## Claims

1. A hammer (20; 120; 220; 320; 520; 620), comprising:
a head (22; 122; 222; 322; 422; 522; 622) and a handle (24; 124; 224; 324; 424; 524; 624) extending from said head;
said head having a front portion with a striking face (26; 126; 226; 326; 426; 526; 626), said head further having a pair of opposing cheeks (30; 130; 330; 430; 530; 630) and a pair of claws (28; 128; 228; 328; 428; 528; 628) extending to distal ends, said distal ends of said claws lying in a common first plane with a lower surface (32; 132; 332; 532) of the front portion and with a shoulder (34; 134; 334; 434; 534) of the head, said shoulder being below said cheeks and adjacent where the head meets the handle; and
at least a portion of said handle extending linearly and perpendicularly to said first plane for allowing a user to draw a straight line which is perpendicular to the first plane; and
one surface of said handle including a plurality of angle indicia with lines that point directly towards the distal ends of the claws so that the hammer can be rotated about a pivot point established by the distal ends of the claws to a desired angle so that a line at that angle can be drawn using the handle as a guide.

2. The hammer (20; 220; 320; 520; 620) as set forth in claim 1 wherein said front portion of said head (22; 222; 322; 422; 522; 622) is hexagonally shaped with the lower surface (32; 332; 532) that lies in said first plane.

3. The hammer (20; 120; 220; 320; 520; 620), as set forth in claim 1 wherein said handle (24; 124; 224; 324; 424; 524; 624) further includes measurement indicia which indicates distance from said first plane.

4. The hammer (20; 120; 220; 320; 520; 620) as set forth in claim 1 wherein the hammer is 36.8cm (fourteen and a half inches) long.

5. The hammer (20; 120; 220; 320; 520; 620) as set forth in claim 4 wherein at least a portion of said handle (24; 124; 224; 324; 424; 524; 624) of said hammer is 3.8cm (one and a half inches) wide.

6. The hammer (120) as set forth in claim 1 wherein a magnet (144) is attached with said handle (124).

7. The hammer (120; 220) as set forth in claim 1 wherein said handle (124; 224) has a plurality of spaced apart notches (140; 240).

8. The hammer (120) as set forth in claim 7 wherein said head (122) has a groove (142) for receiving a projection on a surface and wherein a writing instrument can be placed in one of said notches (140) and said hammer can be rotated about the projection to draw a circle.

9. The hammer as set forth in claim 1 wherein the head (422) of the hammer includes a pair of staple grooves (452a, 452b) that are configured to hold staples (454a, 454b).

## Patentansprüche

1. Hammer (20; 120; 220; 320; 520; 620), umfassend:
einen Kopf (22; 122; 222; 322; 422; 522; 622) und einen Griff (24; 124; 224; 324; 424; 524; 624), der sich von dem Kopf erstreckt;
wobei der Kopf einen vorderen Abschnitt mit einer Schlagfläche (26; 126; 226; 326; 426; 526; 626) aufweist, wobei der Kopf ferner ein Paar gegenüberliegender Backen (30; 130; 330; 430; 530; 630) und ein Paar Klauen (28; 128; 228; 328; 428; 528; 628), das sich zu distalen Enden erstreckt, aufweist, wobei die distalen Enden der Klauen auf einer gemeinsamen ersten Ebene mit einer unteren Oberfläche (32; 132; 332; 532) des vorderen Abschnitts und mit einer Schulter (34; 134; 334; 434; 534) des Kopfes liegen, wobei sich die Schulter unterhalb der Backen und benachbart zu dort, wo der Kopf auf den Griff trifft, befindet; und
sich mindestens ein Abschnitt des Griffes linear und senkrecht zu der ersten Ebene erstreckt, um es einem Benutzer zu ermöglichen, eine gerade Linie zu zeichnen, die senkrecht zu der ersten Ebene ist; und
eine Oberfläche des Griffes eine Vielzahl von Winkelindizien mit Linien beinhaltet, die unmittelbar in Richtung der distalen Enden der Klauen zeigen, sodass der Hammer um einen Schwenkpunkt, der durch die distalen Enden der Klauen festgelegt ist, in einen erwünschten Winkel gedreht werden kann, sodass eine Linie unter diesem Winkel unter Verwendung des Griffes als einer Führung gezeichnet werden kann.

2. Hammer (20; 220; 320; 520; 620) nach Anspruch 1, wobei der vordere Abschnitt des Kopfes (22; 222; 322; 422; 522; 622) sechskantig mit der unteren Oberfläche (32; 332; 532) gebildet ist, die auf der ersten Ebene liegt.

3. Hammer (20; 120; 220; 320; 520; 620) nach Anspruch 1, wobei der Griff (24; 124; 224; 324; 424; 524; 624) ferner Messindizien beinhaltet, die einen Abstand von der ersten Ebene angeben.

4. Hammer (20; 120; 220; 320; 520; 620) nach Anspruch 1, wobei der Hammer 36,8 cm (vierzehneinhalb Zoll) lang ist.

5. Hammer (20; 120; 220; 320; 520; 620) nach Anspruch 4, wobei mindestens ein Abschnitt des Griffes (24; 124; 224; 324; 424; 524; 624) des Hammers 3,8 cm (eineinhalb Zoll) breit ist.

6. Hammer (120) nach Anspruch 1, wobei ein Magnet (144) an dem Griff (124) befestigt ist.

7. Hammer (120; 220) nach Anspruch 1, wobei der Griff (124; 224) eine Vielzahl beabstandeter Kerben (140; 240) aufweist.

8. Hammer (120) nach Anspruch 7, wobei der Kopf (122) eine Nut (142) zum Aufnehmen eines Vorsprungs auf einer Oberfläche aufweist und wobei ein Schreibewerkzeug in eine der Kerben (140) platziert werden kann und der Hammer um den Vorsprung gedreht werden kann, um einen Kreis zu zeichnen.

9. Hammer nach Anspruch 1, wobei der Kopf (422) des Hammers ein Paar Nietennuten (454a, 454b) beinhaltet, das dazu konfiguriert ist, Nieten (454a, 454b) zu halten.

## Revendications

1. Marteau (20 ; 120 ; 220 ; 320 ; 520 ; 620), comprenant :
une tête (22 ; 122 ; 222 ; 322 ; 422 ; 522 ; 622) et un manche (24 ; 124 ; 224 ; 324 ; 424 ; 524 ; 624) s'étendant à partir de ladite tête ;
ladite tête ayant une portion avant avec une face de frappe (26 ; 126 ; 226 ; 326 ; 426 ; 526 ; 626), ladite tête ayant en outre une paire de joues opposées (30 ; 130 ; 330 ; 430 ; 530 ; 630) et une paire de griffes (28 ; 128 ; 228 ; 328 ; 428 ; 528 ; 628) s'étendant jusqu'à des extrémités distales, lesdites extrémités distales desdites griffes se trouvant dans un premier plan commun avec une surface inférieure (32 ; 132 ; 332 ; 532) de la portion avant et avec un épaulement (34 ; 134 ; 334 ; 434 ; 534) de la tête, ledit épaulement étant en dessous desdites joues et de manière adjacente à l'endroit où la tête rencontre le manche ; et
au moins une portion dudit manche s'étendant de manière linéaire et perpendiculaire audit premier plan pour permettre à un utilisateur de tracer une ligne droite qui est perpendiculaire au premier plan ; et
une surface dudit manche incluant une pluralité d'indices d'angle avec des lignes qui pointent directement vers les extrémités distales des griffes de sorte que le marteau peut être mis en rotation autour d'un point de pivotement établi par les extrémités distales des griffes à un angle souhaité de sorte qu'une ligne à cet angle puisse être tracée en utilisant le manche comme guide.

2. Marteau (20 ; 220 ; 320 ; 520 ; 620) selon la revendication 1, dans lequel ladite portion avant de ladite tête (22 ; 222 ; 322 ; 422 ; 522 ; 622) est de forme hexagonale avec la surface inférieure (32 ; 332 ; 532) qui se trouve dans ledit premier plan.

3. Marteau (20 ; 120 ; 220 ; 320 ; 520 ; 620) selon la revendication 1, dans lequel ledit manche (24 ; 124 ; 224 ; 324 ; 424 ; 524 ; 624) inclut en outre des indices de mesure qui indiquent une distance à partir dudit premier plan.

4. Marteau (20 ; 120 ; 220 ; 320 ; 520 ; 620) selon la revendication 1, dans lequel le marteau est de 36,8 cm (quatorze pouces et demi) de long.

5. Marteau (20 ; 120 ; 220 ; 320 ; 520 ; 620) selon la revendication 4, dans lequel au moins une portion dudit manche (24 ; 124 ; 224 ; 324 ; 424 ; 524 ; 624) dudit marteau est de 3,8 cm (un pouce et demi) de large.

6. Marteau (120) selon la revendication 1, dans lequel un aimant (144) est fixé avec ledit manche (124).

7. Marteau (120 ; 220) selon la revendication 1, dans lequel ledit manche (124 ; 224) a une pluralité d'encoches (140 ; 240) espacées.

8. Marteau (120) selon la revendication 7, dans lequel ladite tête (122) a une rainure (142) pour la réception d'une saillie sur une surface et dans lequel un instrument d'écriture peut être placé dans l'une desdites encoches (140) et ledit marteau peut être mis en rotation autour de la saillie pour le traçage d'un cercle.

9. Marteau selon la revendication 1, dans lequel la tête (422) du marteau inclut une paire de rainures à agrafes (454a, 454b) qui sont configurées pour le maintien d'agrafes (454a, 454b).
